# EUROPÄISCHE PATENTSCHRIFT

(11) **EP 2 718 629 B1**
(45) Veröffentlichungstag und Bekanntmachung des Hinweises auf die Patenterteilung: **02.04.2025**
(21) Anmeldenummer: 12726591.6
(22) Anmeldetag: 04.05.2012
(51) Int. Cl.: F24C 7/08, F24C 15/10, G09F 9/33, H05B 3/74, H05B 6/12, G02B 5/22

(54) **ANZEIGEVORRICHTUNG**
DISPLAY DEVICE
DISPOSITIF D'AFFICHAGE

(30) Priorität: 06.06.2011 DE 102011050870
(43) Veröffentlichungstag der Anmeldung: 16.04.2014
(73) Patentinhaber: SCHOTT AG, 55122 Mainz (DE)
(72) Erfinder: KNOCHE, Silke, 55291 Saulheim (DE); BOCKMEYER, Matthias, 55116 Mainz (DE); ANTON, Andrea, 55595 Hüffelsheim (DE); ZENKER, Thomas, 55268 Nieder-Olm (DE); OHL, Gerold, 55286 Sulzheim (DE)
(74) Vertreter: Herrmann, Jochen
(86) Internationale Anmeldenummer: PCT/EP2012/058199
(87) Internationale Veröffentlichungsnummer: WO 2012/168011

(56) Entgegenhaltungen:
- EP-A1- 1 429 366
- EP-A1- 1 505 354
- EP-A1- 2 048 781
- DE-A1- 10 309 225
- DE-A1- 102008 012 602
- DE-U1- 202010 014 361
- JP-A- 2005 093 209
- US-A- 5 932 128
- US-A1- 2005 252 754
- US-A1- 2007 108 184
- WIPO: "G02B IPC", 1 January 2010 (2010-01-01), XP055745837, Retrieved from the Internet <URL:https://www.wipo.int/classifications/ipc/ipcpub/?notion=scheme&version=20100101&symbol=G02&menulang=en&lang=en&viewmode=f&fipcpc=no&showdeleted=yes&indexes=no&headings=yes&notes=yes&direction=o2n&initial=A&cwid=none&tree=no&searchmode=smart> [retrieved on 20201102]
- "Handbook of Optics", 1 January 1978, MCGRAW-HILL, USA, article WALTER G DRISCOLL ET AL: "Handbook of Optics", pages: 8-14 - 8-32, XP055031655

## Beschreibung

Zur Verbesserung der Benutzerführung sind moderne Glaskeramikkochgeräte mit Signallampen oder 7-Segment-Anzeigen ausgerüstet. Die Kochfläche selbst besteht dabei aus einer transparenten, eingefärbten Glaskeramikscheibe (Substrat), die in Aufsicht schwarz erscheint. Die Signallampen geben dem Benutzer Informationen über den Ein-Zustand des Kochgerätes bzw. einzelner Kochzonen, der Reglerstellung und auch ob die Kochzone nach dem Ausschalten noch heiß ist. Als Leuchtmittel werden üblicherweise LED-Lämpchen eingesetzt.

Aufgrund der Einfärbung der Glaskeramikkochfläche und der sehr begrenzten Auswahl farbiger LED-Anzeigen, ist das zur Verfügung stehende Farbspektrum für die Benutzerinformation sehr stark eingeschränkt. Standardmäßig sind diese Anzeigen rot oder ggf. orange, was sich auch aufgrund der Einfärbung der Glaskeramikkochfläche ergibt. In der DE 100 52 370.6 wird der Transmissionsverlauf für eine Glaskeramikkochfläche beschrieben, die insbesondere auch eine Durchlässigkeit für blaues Licht bei ca. 450 nm zulässt und damit eine erweiterte farbliche Anzeigefähigkeit erlaubt. In der DE 10 2009 013 127.2 sind auf Basis dieser Glaskeramik unterschiedliche Anzeigemöglichkeiten aufgezeigt. Durch die Erweiterung des Transmissionsspektrums auch auf den blauen Wellenlängenbereich ist zwar die Farbgebung der Anzeigen erweitert worden, aufgrund der geringen Anzahl verschiedenfarbiger LED-Anzeigen ist jedoch auch bei dieser GlaskeramicKochfläche die Anzahl der für den Benutzer sichtbaren Farben eingeschränkt. Eine weiße LED würde beispielsweise aufgrund des Transmissionsverlaufes der Kochfläche für den Benutzer mit einem deutlichen Gelbstich wahrgenommen. In der DE 10 2010 061 123.9 wird vorgeschlagen, diesen Mangel durch Verwendung durch RGB-LEDs zu vermeiden. Eine LED-Lampe besteht dabei aus drei LEDs in den Grundfarben rot, grün und blau. Entsprechend der Transmission der Glaskeramikkochfläche wird die Intensität der 3-farbigen LEDs so eingestellt, dass in Summe für den Betrachter ein weißer Farbeindruck des Leuchtsignals entsteht. Diese Technik benötigt drei LEDs und die zugehörigen Ansteuerungen. Aufgrund der unterschiedlichen Alterung der verschiedenfarbigen LEDs können sich über längere Benutzungszeiten Farbverschiebungen ergeben.
US 2007/0108184 A1 offenbart eine Kochvorrichtung mit einer Anzeigevorrichtung, die Fluoreszenzröhren aufweist.
US 2005/0252754 A1 offenbart eine Kochvorrichtung mit einer Kochfläche aus Glaskeramik. Auf der Rückseite der Kochfläche ist ein elektrisches Schaltgerät mit einer Bedienwelle angeordnet. Die Bedienwelle ist durch einen Durchbruch der Glaskeramik hindurchgeführt und kann von der Vorderseite der Glaskeramik her betätigt werden. An dem Schaltgerät sind auch Leuchtelemente angeordnet, die zu Anzeigezwecken verwendet werden können.
Eine weitere Kochfläche ist aus EP 1 505 354 A1 bekannt. Diese Kochfläche besteht aus einem transluzenten Glaskeramik-Material.

Aufgabe der Erfindung ist es daher, eine preiswerte und robuste Anzeigevorrichtung zu schaffen, mit transparenter eingefärbter Glaskeramik, um für den Benutzer beliebige und vorher bestimmbare Farbeindrücke zu realisieren.

Die Aufgabe wird gelöst mit einer Anzeigevorrichtung gemäß Anspruch 1. Erfindungsgemäß ist es mithin vorgesehen dass zwischen der Glaskeramikkochfläche und dem Leuchtmittel ein - entsprechend dem gewünschten Farbeindruck - Kompensationsfilter in Form einer Farbschicht eingebracht wird. Die Verschiebung des Farbortes des Leuchtmittels durch die Filtereigenschaften der Glaskeramik wird durch die Kombination der Glaskeramik mit einem solchen Kompensationsfilter zu einem gewünschten Farbort korrigiert.

Die Gesamttransmission des Substrates τges(λ) setzt sich aus den Transmissionen der Glaskeramik τGK(λ) und des Kompensationsfilters τKF(λ) zusammen (Gl. 1). Die Intensitätsverteilung iLE(λ) des Leuchtelementes wird durch das Gesamttransmissionsspektrum τges(λ) zu der Intensitätsverteilung iA(λ) der Anzeige verschoben (Gl. 2), die ein Beobachter auf der Anzeigenseite wahrnimmt (Gl. 2). Tges(λ) = τKF(λ)·τA(λ) Gl. 1 iA(λ) = τges(λ).iLE(λ) Gl. 2

Die einhergehende Verschiebung des Farbortes lässt sich im CIE-Normenvalenzsystem CIExyY (CIE - Commision internationale de l'éclaireage) darstellen. (Für die nachfolgende Beschreibung und deren Beispiele wird in dieser Schrift die Version CIExyY 1931 mit einem 2° Beobachter verwendet.) Das menschliche Auge ist kein spektral kontinuierlicher Lichtsensor, sondern ist aus Farbrezeptoren für begrenzte rote, grüne und blaue Spektralbereiche aufgebaut. Dem entsprechend ist das Sinnesempfinden der L, M, K Zapfen, mit Empfindlichkeiten im roten, grünen und blauen Lichtspektrum. Aufgrund von Testreihen mit Testpersonen wurden im CIE-Formalismus Tristimulusfunktionen x, y, z und deren Integrale X, Y, Z definiert, die als ein Triplett von künstlichen Primärfarben durch deren Kombination den gesamten empfindbaren Farbraum unserer Augen nachbilden können. Dabei entsprechen die x und z Funktionen nur angenähert der L- und K-Zapfenempfindlichkeit. Die y Funktion ist so konstruiert, dass sie das Helligkeitsempfinden bei Tag nachbildet und entspricht nahezu der M-Zapfenempfindlichkeit. Mit Gl. 3 und Gl. 4 ist der empfundene Farbort hierbei durch die normierten Werte x und y eindeutig beschrieben, Y ist ein Maß für die Helligkeit. Der CIExyY Formalismus beschreibt Selbstleuchter, optional durch absorbierende Medien hindurchleuchtend, deren in das Auge fallende Lichtspektrum in die normierten X. Y, Z CIE-Koordinaten transformiert wird, die dann den Farbort und die Helligkeit des Selbstleuchters beschrieben. A = 1 N ∫ a (λ)·τ(λ)·i(λ)·dλ Gl. 3 mit A = X, Y, Z und a = x, y, z mit N = ∫y (λ)·i(λ)·d(λ) x = X S, y = Y S, z = 1 - x - y Gl. 4 mit S = X + Y + Z

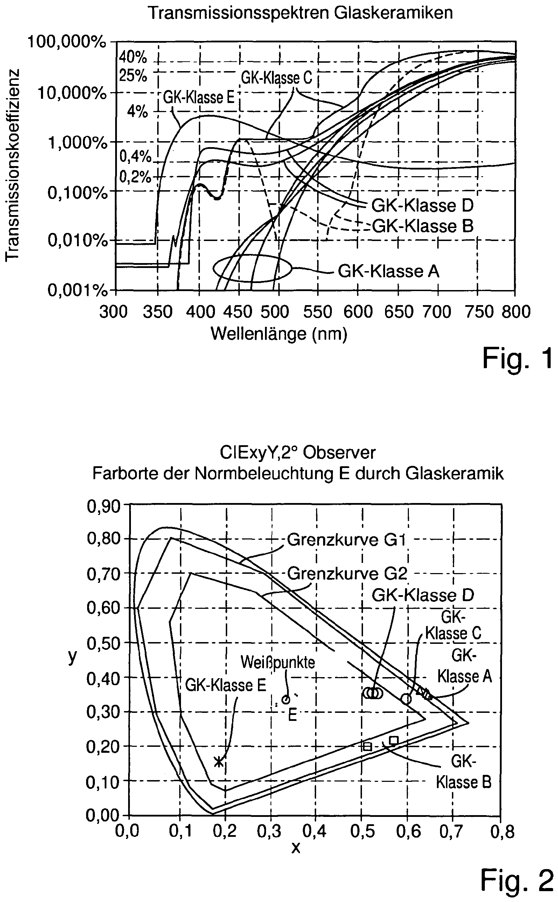

Voraussetzung zur Erreichung eines gewünschten Anzeigefarbortes im roten bis blauen Spektralbereich für einen Beobachter mittels eines Kompensationsfilters und mittels vorzugsweise eines kommerziell üblichen und kostenverträglichen Anzeigenleuchtelementes sind minimale Transmissionswerte des Substrates im Spektralbereich aller drei L, M, K Zapfen, bzw. aller drei x, y, z CIE-Primärspektren. In Fig. 1 sind typische Transmissionsspektren verschiedener Glaskeramiktypen (Klassen) dargestellt, die üblicherweise für Kochflächen Verwendung finden. Hierbei handelt es sich um die derzeit am weitesten verbreiteten mit Vanadium (V) eingefärbte Glaskeramiken Typ A (beispielsweise CERAN SUPREMA<^{®}>, CERAN HIGHTRANS<^{®}>, KeraBlack<^{®}>), um Glaskeramiken mit Einfärbung durch Co, Fe, Ni (Typ B, beispielsweise CERAN COLOR<^{®}>), durch V, As und Fe (Typ C, China), durch V, Fe (Typ D, beispielsweise CERAN HIGHTRANS eco<^{®}>, und solche durch Einfärbung mit Ti<3+> mittels reduzierender Läuterung (beispielsweise ZnS-Läuterung), dem Typ E.

Um mit handelsüblichen Leuchtmitteln (beispielsweise LEDs) durch die Glaskeramik hindurch auf der Anzeigenseite genügend helle Farbeindrücke im blauen bis roten Spektralbereich hervorzurufen, sind Glaskeramiken erforderlich, die eine mittlere Transmission von >0,2%, vorzugsweise von >0,4%, jeweils für jeden der Spektralbereich von 420-500nm, 500-620 nm und 550-640 nm aufweisen. Wie in Fig. 1 nachzuvollziehen ist, erfüllen diese Bedingung die neueren Glaskeramikklassen D und E, mit Einschränkungen auch Klasse C. Die bisherige, weit verbreitete Glaskeramikklasse A erfüllt diese Bedingung nicht. Mit dieser Glaskeramik sind auch erfindungsgemäße Farbortverschiebungen über den gesamten sichtbaren Spektralbereich mit üblichen Leuchtmitteln und Filtern unmöglich, insbesondere auch keine Weißkompensation. Andererseits darf auch die spektrale Transmission nicht zu hoch sein, um ohne zusätzliche Hilfsmittel, wie lichtdichte Unterseitenbeschichtungen, ein Einblick in den Innenaufbau der Kochfelder zu verwehren und eine ästhetisch bevorzugte, farbig gleichförmige, nicht transparente Kochfläche darzustellen. Diese maximale Transmission definieren wir mit < 40%, vorzugsweise < 25 % bei 400 nm und 700 nm, und zusätzlich im Mittel von < 4% zwischen 450-600nm. Wie in Fig. 1 nachzuvollziehen ist, erfüllen diese zweite Bedingung alle aufgezeigten Glaskeramikklassen außer der Klasse C, die in der Praxis zu transparent erscheint, um einen Einblick in das Innenleben eines Kochfeldes zu verhindern. Eine weitere, dritte Bedingung ergibt sich aus der Machbarkeit einer Farbverschiebung zu einem weißen Farbeindruck eines handelsüblichen Leuchtmittels durch eine Glaskeramikkochfläche und eines nicht zu aufwendigen Kompensationsfilters. Hierzu dürfen die Transmissionsunterschiede in den drei spektralen Sinnesbereichen nicht zu groß sein. Dies wird in Fig. 2 dargestellt. Die Farborte der Normbeleuchtung durch erfindungsgemäße Glaskeramiken sollten innerhalb einer Grenzkurve G1, vorzugsweise einer Grenzkurve G2 liegen. Die Eckkoordinaten zu den Grenzkurven G1 und G2 sind in Tabelle 2 aufgelistet.

Nimmt ein Beobachter ein Lichtreiz wahr, der aus zwei Lichtsignalen besteht, die räumlich nebeneinander liegen, aber mit dem Auge räumlich nicht auflösbar erscheinen, und die durch die Intensitätsverteilung der Leuchtelemente und durch Filtertransmissionen beschrieben sind, so addiert sich der wahrgenommenen Sinnesreiz linear (Gl. 5), und der summarische Farbort (x, y) liegt im Chromatizitätsdiagramm CIExyY auf einer Geraden zwischen den Farborten (x1, y1) und (x2, y2), der zwei Lichtsignale (Gl. 6). Im speziellen Fall gleicher Intensitäten (Gl. 7) liegt (x, y) in der Mitte zwischen den Farborten der beiden Lichtsignale (Gl. 8). A = 1 N ∫ a (λ)·(τ1(λ)·i1(λ) + τ2(λ)·i2(λ))·dλ = A1(τ1, k1i) + A1(τ2, k2i) Gl. 5 mit i1 = k1·i, i2 = k2·i, k1 + k2 = 1 x = k1x1 + k2x2Gl. 6 mit xi = f(τi, i), y, z entsprechend. k1 = k2 = 1/2 Gl. 7 <img class="EMIRef" id="350214855-00060001" />

Dieser lineare Zusammenhang ist auch bekannt aus Farbdiagrammen zum Beispiel zu Bildanzeigen, wie CRT oder LCD Monitoren, bei denen mögliche wahrnehmbare Farborte im ClExyY Diagramm in einem Dreieck zwischen den Farborten der drei Primärfarben des Anzeigegerätes liegen, i.a. ein RGB-Farbraum, oder in einem Farbpolygon bei mehr als drei Primärfarben. Hierbei berechnet sich der Farbort aus der linearen Kombination dreier oder mehrerer Primärintensitäten gemäß (Gl. 6).

In der erfindungsgemäßen Anwendung zweier hintereinander angeordneter Filter, eines Substrates (beispielsweise Glaskeramik) und eines Kompensationsfilters ist der Zusammenhang nicht mehr linear gegeben wie Gl. 9 im Vergleich zu Gl. 5 verdeutlicht. In Gl. 9 können für τ1(λ) und τ2(λ) zum Beispiel aus Gl. 1 die Transmissionspektren der Glaskeramik τGK(λ) und des Kompensationsfilters τKF(λ) eingesetzt werden. A12 = 1 N ∫ a (λ)·τ1(λ)·τ2(λ)·i(λ)·dλ Gl. 9

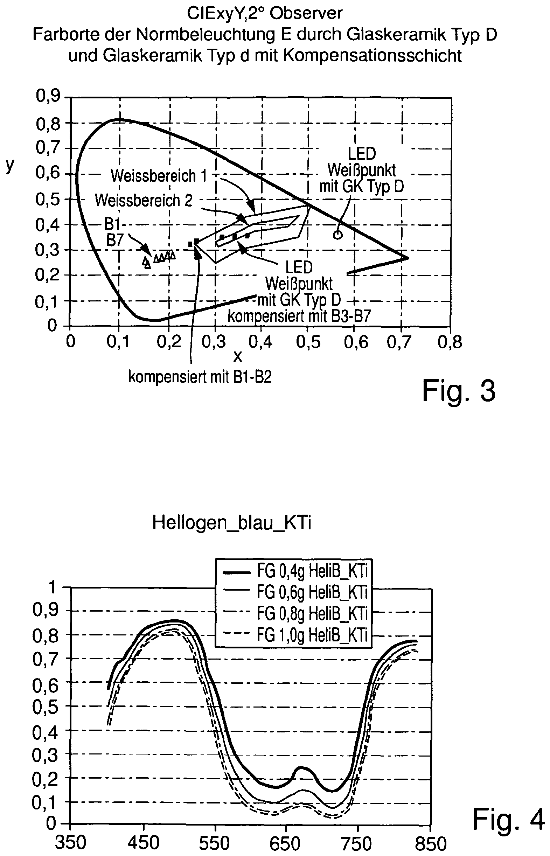

Der Farbort des Leuchtelementes durch die hintereinander angeordneten Filter liegt nicht mehr notwendigerweise auf einer Geraden zwischen den Farborten des Leuchtelementes durch die einzelnen Filter. Umgekehrt führt dies zu dem Phänomen, dass derselbe gemeinsame, erfindungsgemäß kompensierte Farbort eines Leuchtelementes durch eine Glaskeramik mit verschiedenen Kompensationsfiltern erreicht werden kann, wobei der Farbort des Leuchtelementes durch die einzelnen Kompensationsfilter je nach spektraler Verteilung nicht identisch sein muss. In Fig. 3 sind die Farborte des Normlichtes E einzeln durch eine Glaskeramik vom Typ D und einzeln durch verschiedene Farbfilter B1-B7, die jeweils in Kombination mit der Glaskeramik hintereinander angeordnet das Normlicht an demselben Gesamtfarbort erscheinen lassen. In dem gezeigten Beispiel sind die Farbfilter so konstruiert, dass der Gesamtfarbort für den Beobachter am Unbuntpunkt E (Grau- oder Weißpunkt E) liegt.

Mit einem erfindungsgemäßen Farbfilter ist es, wie beschrieben, somit möglich die Verschiebung des ursprünglichen Farborts des Leuchtmittels durch das eingefärbte Substrat wieder zu kompensieren, im speziellen zu einem weißen Farbort. Eine weitere erfindungsgemäße Anwendung ist, den Farbort des Leuchtmittels auf der Anzeigenseite des Substrates zu einem gewünschten Farbort zu verschieben, der verschieden zum ursprünglichen Farbort des Leuchtmittels ist. Die kombinierte Verschiebung des Farbortes durch das Substrat und den Filter kompensiert sich hierbei gewollt nicht. Hiermit kann man zum einen Farborte erzeugen die beispielsweise durch verfügbare, feste Wellenlängen handelsüblicher LEDs nicht dargestellt werden können, beispielsweise ein Farbort der zwischen dem einer gelben und orangen LED liegt. Dies ist z.B. für die Identifizierung, Differenzierung und Vermarktung von Produktlinien vorteilhaft. Zum anderen können Leuchtelemente einheitlich und damit mit Kostenvorteil mit einer Sorte nichtmonochromatischer, sondern spektral breit emittierender, farbiger Leuchtmittel aufgebaut sein, nämlich mit einer oder mehreren weißen LEDs. Zusätzlich können beispielsweise auch Leuchtstoffröhren Verwendung finden. Durch Anwendung verschiedener erfindungsgemäßer Farbfilter lassen sich verschiedene Farborte für verschiedene Produktlinien oder gleiche Farborte einer Produktlinie kombiniert mit verschieden eingefärbten Substraten erzeugen. Farbortverschiebungen und Kompensationen sind für spektral breitbandige weiße LEDs anwendbar. Einfarbige, nahezu monochromatische Leuchtmittel, beispielsweise wie rote, blaue, grüne LEDs, erfahren als Einzelfarbe eingesetzt im Allgemeinen keine merkliche Farbortverschiebung durch Filter.

Erfindungsgemäß den Farbort eines Leuchtmittels zu Weiß zu kompensieren, heißt nicht, genau den Unbuntpunkt E zu treffen. Stattdessen toleriert das Auge einen weiten Farbortbereich als Weißeindruck. Dies hängt unter anderem auch von den Farborten der umgebenden Oberflächen ab, wie einer rot-schwarzen Kochfeldoberfläche. Ziel ist es daher, erfindungsgemäß zur Weiß-Kompensationen eines beliebigen Leuchtelementes einen Farbort zu erreichen, der in den Grenzen des Weißbereiches W1, vorzugsweise des Weißbereiches W2 liegt. Der Weißbereich W2 umschließt hierbei die im ANSI definierte Weißfelder (ANSI binning) 1A, ..., 1D, ..., 8D, die typischerweise von LED-Herstellern herangezogen werden, um die Farborte ihrer weißen LEDs zu charakterisieren. Dieser Bereich entspricht Farbtemperaturen von 2580K bis 7040K (CCT, color correlated temperature), entsprechend einem Weißeindruck von Kaltweiß bis Warmweiß. Die Eckpunkte der erfindungsgemäß definierten Weißbereiche W1 und W2 in Fig. 3 sind in Tabelle 1 aufgelistet.

Erfindungsgemäß ist die Farbortkompensation nicht auf die Beispielbeschichtungen 1-4 oder die Normlichtquelle E beschränkt. Vorzugsweise werden in einer Anwendung kommerziell erhältliche und kostengünstige Leuchtmittel, nämlich weiße LEDs eingesetzt. Auch andersfarbige, nicht monochromatische Leuchtmittel, wie beispielsweise Leuchtstoffröhren oder weiterhin beispielsweise eine Kombination aus blauen, grünen und roten LEDs (RGB-Leuchtmittel), die beispielsweise als Hinterleuchtung von LCD-Anzeigen auf einen festen Farbort eingestellt sind oder eine Farbdarstellung der Anzeige steuern, können eingesetzt werden, um mittels entsprechend aufgebauter Kompensationsfiltern auf der Anzeigenseite des Kochfeldes zu den ursprünglichen Farbort der Leuchtmittel zu kompensieren oder speziell einen weißen Farbeindruck oder auch einen beliebigen Farbeindruck zu erzeugen.

Erfindungsgemäß ist die Farbortkompensation nicht auf einen weißen Farbort beschränkt. Es kann jeder gewünschte Farbort mit einem entsprechenden Kompensationsfilter eingestellt werden, zum Beispiel Markengeräte-spezifische Farben für Anzeigen oder Firmenlogos, oder auch verschiedene Farborte zur benutzerfreundlichen Unterscheidung von Warnmeldungen, Hinweisen oder Benutzerhilfen, oder verschiedene Farborte für verschiedene Leistungsstufen bei Kochgeräten. Dies kann in vielfältigen Beispielen Anwendung finden, die zur leichteren Benutzerführung, Statusanzeigen oder verschiedenes Ambiente einer Schmuckbeleuchtung dienen.

Die Farbschicht erlaubt durch verschiedene Beschichtungsverfahren, wie z.B. Siebdruck, eine scharfe Abgrenzung des Signalfeldes und Abschirmung von Streulicht, sowie eine Darstellung von Zeichen Symbolen oder Schriftzügen, die im Ein-Zustand der Beleuchtung für den Benutzer sichtbar sind und im Aus-Zustand vom Benutzer nicht wahrnehmbar sind. Selbst die Position dieser Markierungen / Logos ist im Aus-Zustand nicht erkennbar, wodurch die einfarbige edle Anmutung der Glaskeramikoberfläche für den Benutzer erhalten bleibt. Dieser Effekt wird als Deadfront-Effekt bezeichnet und von Designern oftmals gewünscht, da dadurch das Kochgerät in der Gesamtästhetik deutlich aufgewertet wird. Dieser Deadfront-Effekt ist bspw. bei den insbesondere in Japan bekannten transparenten Glaskeramikkochflächen nur mit erheblichem zusätzlichem Aufwand möglich. Aufgrund der hohen Transparenz dieser Kochflächen sind Display-Anzeigen oder Lämpchen direkt bzw. deutlich sichtbar was teilweise als störend empfunden wird. Im Gegensatz zu diesen transparenten Kochflächen können die dunkel eingefärbten Kochflächen weiterhin auch mit leistungsstarken Strahlungsheizkörpern kombiniert werden, wodurch mit dem vorgeschlagenen Verfahren die Glaskeramikkochgeräte mit Strahlungsheizkörpern bzw. Halogenheizkörpern in der Benutzerführung deutlich aufgewertet werden.

Die Abbildungsschärfe auf der Oberseite von feinen Linien und Schriftzügen ist bei Einsatz der üblicherweise auf der Unterseite genoppten Glaskeramikkochflächen ohne optisch störende Verzerrungen möglich, indem auf die Noppen eine brechzahlangepasste Ausgleichsschicht aufgetragen wird. Dies ist ein weiterer deutlicher Vorteil gegenüber der im US-Patent US 6369365 beschriebenen aufgedruckten Maskierung auf einer genoppten Unterseite. Durch die direkte Bedruckung der genoppten Unterseite kommt es zu stark störenden Verzerrungen, wodurch nur sehr große grobe Fenster und Symbole dargestellt werden können. Die Kochflächendicke beträgt üblicherweise 4 mm, in kommerziellen Anwendungen auch bis zu 6mm. Zur Erhöhung der Farbintensität bzw. Leuchtstärke ist es auch vorstellbar, Kochflächen mit einer reduzierten Dicke von beispielsweise 3 mm einzusetzen.

Neben den hier aufgezeigten Hauptanwendungsfeld für Beleuchtungen mit Einzel-LEDs oder 7-Segmentanzeigen ist dieses System selbstverständlich auch für jede beliebige andere Lichtquelle und Darstellungsform geeignet, es können beispielsweise als Lichtquelle auch Halogenlampen, Leuchtstäbe, Faseroptiken oder Leuchtstoffröhren eingesetzt werden. Neben Leuchtpunkten oder 7-Segment-Anzeigen sind auch Balkenanzeigen oder Leuchtkennzeichnungen zur Kochzonenidentifizierung oder Markierung vorstellbar oder Ausleuchtung von größeren Kochzonenflächen oder Umrandungen. Weiterhin sind erfindungsgemäße Farbortkompensationen oder Verschiebungen auch für Hintergrundbeleuchtungen von alphanumerischen oder graphischen Displays, beispielhaft LCD-Anzeigen, anwendbar. Neben den bevorzugten Einsatz in Glaskeramikkochgeräten kann dieses System auch im Panelbereich von Backöfen oder Dominokochgeräten einschließlich Grillplatten eingesetzt werden. Bekannt sind beispielsweise auch Kaminverkleidungen aus Glaskeramik. Auch bei diesen Kaminverkleidungen ist eine Beleuchtung mit dem vorgeschlagenen System zur Verbesserung des Benutzerkomforts möglich. Die Kochfläche kann plan, gebogen oder komplex verformt ausgebildet sein. Als Beheizung für die Kochstellen sind Gasbrenner, Induktionsspulen oder Strahlungsheizkörper bzw. Halogenheizkörper vorstellbar.

Entscheidend für den farblich gewünschten Gesamteindruck ist ein entsprechender Transmissionsverlauf, der sich aus den Transmissionsverläufen des Substrates und des Farbfilters (Farbschicht) ergibt. Da der Transmissionsverlauf des Substrates "vorgegeben" ist, kann die Korrektur nur über die Farbschicht erfolgen. Der Korrekturfiltereffekt der Farbschichten wird durch den jeweiligen Transmissionsverlauf im sichtbaren Bereich bestimmt, durch folgende wesentliche Parameter:
- Lage des Transmissionsmaximums
- Breite des Transmissionsmaximums
- Intensität des Transmissionsmaximums

Die Lage und Breite des Transmissionsmaximums wird durch die Farbzusammensetzung bestimmt, insbesondere durch die farbgebenden Pigmente. Die Intensität hingegen wird durch die Schichtdicke der Farbe und die Konzentration des Farbstoffes bzw. des Farbpigments in der Farbmatrix bestimmt.

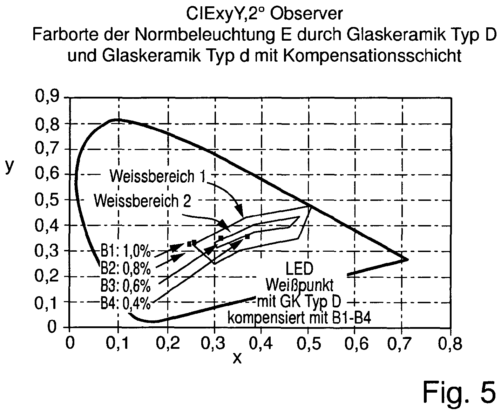

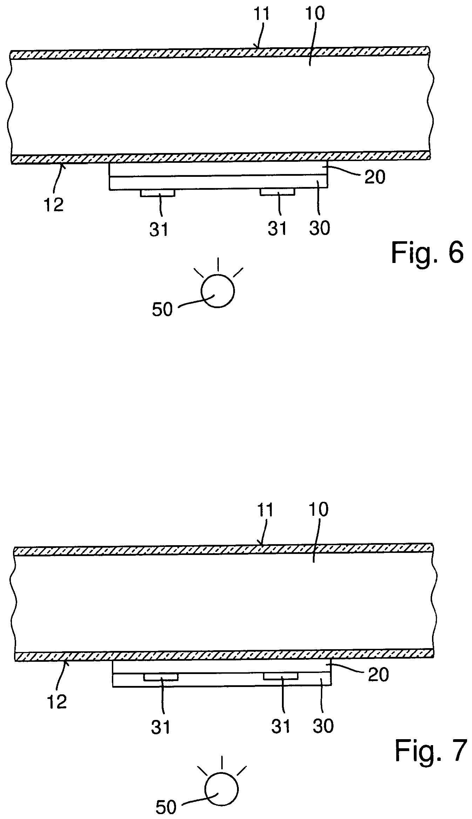

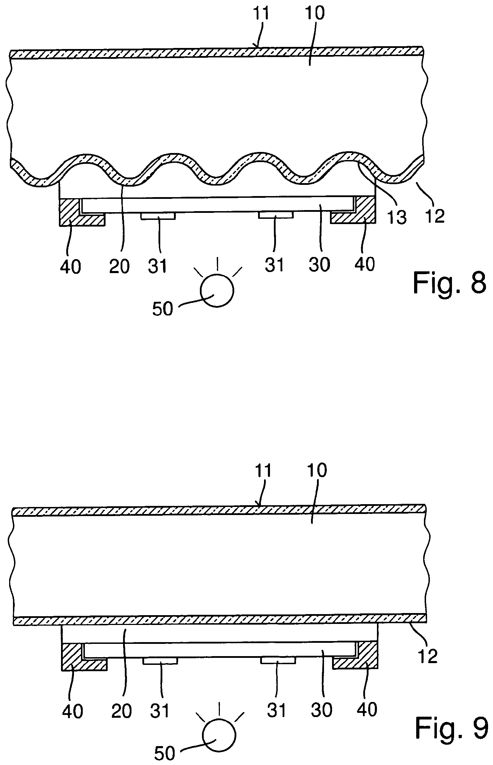

So sind in Fig. 4 und Fig. 5 verschiedene Farbfarbstoffkonzentrationen in Abhängigkeit der Transmission (Fig. 4) und des Farbortes (Fig. 5) dargestellt, wobei in Fig. 4 die Spektren B1 bis B4 optimiert zur Kompensation der Normlichtquelle E für den Glaskeramiktyp D und in Fig. 5 die Konzentrationsverläufe B1 bis B4 dargestellt sind. Durch eine gezielte Auswahl der Farbstoff und oder Pigmentkonzentration kann der Farbort in den gewünschten Bereich eingestellt werden.

Die Farbschicht mit 1% und 0,8% Heliogenblau (B1 bzw. B2) liegen am Rande des Weißbereiches W1. Hingegen B3 mit 0,6% Heliogenblauanteil in der Farbmatrix liegt am oberen Ende des Weißbereiches W2 und B4 mit 0,4% desselben Blaufarbstoffes unterhalb von W1. Durch die Lage der Punkte B1-B4 in der Farbortgraphik (Fig.) wird gezeigt, dass der gewünschte Farbort durch eine gezielte Einstellung der Pigmentkonzentration möglich ist. Die Farbstoff bzw. Pigmentkonzentration in der fertig eingebrannten Farbschicht kann durch die Schichtdicke und/oder durch die Farbstoff und oder Pigmentkonzentration in der Farbmatrix auf das jeweilige Substrat angepasst werden.

Die Farbschicht kann aus verschiedenen Farbsystemen hergestellt werden. Zum einen eignen sich organische Farbsysteme z.B. für Niedrigtemperaturanwendungen, zum anderen anorganische Farbsysteme auch für Hochtemperaturanwendungen bzw. Mischungen derselben.

Wie vorstehend ausgeführt, kann der angepasste Transmissionsverlauf durch Farbschichten, die aus Farbmatrix und/oder Farbstoffen und oder Pigmenten besteht, erreicht werden. Als Farbstoffe/Pigmente werden organische und anorganische Farbstoffe und oder Pigmente verwendet, bevorzugt absorbierende organische und anorganische Farbstoffe/Pigmente, besonders bevorzugt blaue, grüne und blaugrüne Farbstoffe/Pigmente. Von den Blau-Grünen Farbstoffe/Pigmenten werden solche Farbstoffe/Pigmente bevorzugt, deren Transmissionsmaxiumum im Bereich von 400-600 nm liegt, besonders bevorzugt im Bereich 450-550 nm. Als Farbstoffe werden beispielsweise eingesetzt Eisencyan-Komplexe, Indanthron, Indigo, Kupferphthalocyanine, bevorzugt die β-Form der Kupferphthalocyanine, Chrom-Chelate, vorzugsweise Cr3+ mit Liganden aus der Azo- und Azomethinreihen z.B. Heliogenblau 23050.

Als Farbpigmente werden beispielsweise Cobalt-Zinn-Oxid-Verbindungen (Mischoxide), Aluminiumsilikate bevorzugt schwefelhaltige Aluminiumsilikate (z.B. Ultramarinblau, -grün), Zirkonsilikate, bevorzugt mit Vanadiumzusatz, besonders bevorzugt mit 1,5% Vanadiumzusatz, Zirkonsilikat-Vanadiumoxide, Calcium-Kupfer-Silikate, bevorzugt CaCuSi4O10, Kupfercarbonatverbindungen 2CuCO3·Cu(OH)2, Cobalt-Aluminium-Oxid-Verbindungen, bevorzugt als Cobalt-Aluminat (Cobalt-Aluminium-Spinell; Colour Index Blau 28), und Cobalt-Chrom-Oxid-Verbindungen, bevorzugt als Cobalt-Chromit (Cobalt-Chrom-Spinell; Colour Index Blau 36), verwendet.

Diese Pigmente werden bevorzugt als Nanopartikel eingesetzt. Als besondere Ausführung können die genannten Pigmente auch als Streupartikel appliziert werden.

Die Farbmatrix kann aus organischen und / oder anorganischen Komponenten bestehen, wo insbesondere für Anwendungen im höheren Temperaturbereich die anorganische Matrix bevorzugt eingesetzt wird. Eine anorganische Farbmatrix besteht im Allgemeinen aus einem Glas-Pulver und einem Medium, mit dem sich die Verarbeitbarkeit/Druckbarkeit etc. einstellen lässt. Die organische Farbmatrix besteht aus einem Binder, Lösungsmittel und Zusätzen wie Härter, Vernetzer, Verlaufsmittel, Additive, Entschäumer, sauren und oder basischen und oder kationischen und oder anionischen und oder radikalischen Polymerisations-Startern

Als Binder können Kautschuk, Polyurethanharze, Silicone (org. und/oder anorganisch vernetzend), Sol-Gel-Verbindungen, Hybrid-Polymere, Acrylatbasierende Systeme, bevorzugt Methacrylate, Epoxide, Polyamide, Polyimid und Mischungen derselben verwendet werden. Diese Binder können mit und ohne Nanopartikel eingesetzt werden.

Insbesondere kann die Beschichtungszusammensetzung Sol-Gel-Vorstufen des Siliziums, Titans, Zirkons, Aluminiums, Zinks, Magnesiums, Calciums, Zinns oder Mischungen davon umfassen. Ganz besonders bevorzugt sind die Sol-Gel-Vorstufen SiORxRy, TiORxXy, ZrORxXy, AIORxXy, ZnORxXy, MgORxXy, CaORxXy und SnORxXy.

In einer Ausführungsform ist die Partikelgröße der Sol-Gel-Vorstufe und oder metalorganischen und oder anorganischen Nanopartikel in einem Bereich von 0,05 bis 200 nm, besonders bevorzugt von 1 bis 100 nm. Die Partikelform kann dabei insbesondere sowohl kugelförmig als auch irregulär als auch kettenförmig sein.

In einer besonders bevorzugten Ausführungsform umfasst die Beschichtungszusammensetzung eine UV-härtbare und oder thermisch-härtbare hybridpolymere, hydrolysierte und kondensierte Alkoxysilanvorstufe, insbesondere Glycidylpropyloxyltriethoxysilan und/oder Methacryloxypropyloxytrimethoxysilan welche ferner mit Polysiloxanen funktionalisiert werden kann. Bevorzugt werden Methyl und oder Phenylfunktionalisierte Polysiloxane verwendet. Die Sol-Gel-Schicht auf der Glaskeramik umfasst also vorzugsweise die Reaktionsprodukte hierin beschriebener Sol-Gel-Vorstufen mit hierin beschriebenen Polysiloxanen.

In einer besonderen erfindungsgemäßen Ausführungsform enthält die Beschichtung anorganische Nanopartikel. Die Nanopartikel verbessern bspw. die Kratzfestigkeit der Beschichtung.

In dieser besonderen Ausführungsform werden anorganische Nanopartikel der Beschichtungslösung zugegeben. Bevorzugt beträgt der Volumenanteil der Nanopartikel an der Beschichtungszusammensetzung mehr als 10%, weiter bevorzugt mehr als 20%. Die Nanopartikel werden bevorzugt als alkoholische Dispersion zugesetzt.

Bevorzugt umfasst die Beschichtungszusammensetzung auch Nano-Partikel in Form von amorphen oder nanokristallinen Metalloxiden. Bevorzugte Metalloxide sind Siliziumoxid (SiO2), Titandioxid (TiO2), Zirkondioxid (ZrO2), Y2O3 stabilisiertes Zirkonoxid, Aluminiumoxid (Al2O3), Zinkoxid (ZnO) und Indiumzinnoxid (ITO). Vorzugsweise können auch deren hybridpolymere Derivate oder Verbindungen eingesetzt werden. Die Metalloxide können in Form von Partikeln und oder metalorganischen Polymern vorliegen.

Als Lösungsmittel werden bspw. Terpeniol, n-Butylacetat, Carbitol, Carbitolacetat, Etylenglykolmonoethylether und Mischungen derselben eingesetzt. Insbesondere für Siebdruck geeignete Farbmatrix benötigt hochsiedende Lösungsmittel mit einem Dampfdruck < 5 hPa, bevorzugt < 2 hPa, besonders bevorzugt < 1 hPa. Zusätzlich können Härter z.B. zur Erhöhung der Schichthärte/Kratzbeständigkeit zugefügt werden, beispielsweise Nanopartikel, Bis-epoxide. Je nach Beschichtungsverfahren können auch noch verschiedene Verlaufsmittel zugegeben werden, beispielsweise PEG, BYK 302, BYK 306, um homogene Schichtdicken zu erreichen. Insbesondere beim Druck auf nichtglatte Oberflächen, z.B. genoppte Oberflächen, wird ein Benetzungsmittel/Verlaufsmittel zugegeben, das eine Nachbildung der Noppen zulässt.

Die Bestandteile der Farbmatrix und die Farbstoffe und oder Pigmente werden homogenisiert, vorzugsweise mittels Dispermat (Ultraturax) oder Dreiwalzenstuhl.

Es werden verschiedene Beschichtungsverfahren angewendet, beispielsweise Druckverfahren wie Ink-Jet-Druck, Off-Set-, Tampon-Druck, Rollcoating, bevorzugt Siebdruck; Tauchverfahren, Spin-coating, Sprühverfahren. Für diese Beschichtungsverfahren muss die Viskosität der Farbmatrix auf die Verarbeitbarkeit /Druckbarkeit angepasst werden, insbesondere für das bevorzugte Siebdruckverfahren das Thixotropieverhalten. Dafür werden u.a. als organische Eindicker Cellulose-Verbindungen, Polyvinylpyrilidon, Polyethylenglykol, Block-Co-Polymere, als anorganische Eindicker: Aerosile, flammenpyrolytische bzw. per Fällungsprozess hergestellte SiOx bzw. AlxOy-Partikel verwendet.

Nach der Beschichtung werden die Farbschichten thermisch gehärtet und/oder UV gehärtet, im Falle von anorganischer Farbe (keramische Farbe) wird die Farbschicht bei Temperaturen von über 500°C eingebrannt, bevorzugt > 700°C.

Der erfindungsgemäße Filtereffekt der Farbschichten erfordert homogene Schichtdicken, so dass die Schwankungen der Schichtdicke < 3 µm liegen, bevorzugt < 1 µm ganz besonders bevorzugt < 0,5 µm. Daher werden beidseitig glatte Oberflächen bevorzugt. "Glatt" bedeutet in diesem Zusammenhang, dass die Ober-und Unterseite etwa die gleiche Oberflächengeometrien aufweisen und die Unterseite nicht die übliche Noppenstruktur aufweist.

Bei nichtglatten Oberflächen, z.B. genoppten Oberflächen kann direkt auf die Oberfläche eine brechzahlangepasste Ausgleichsschicht aufgetragen werden, die bspw. aus Polyurethanharzen, Silicone (org. und/oder anorganisch vernetzend), Sol-Gel-Verbindungen, Hybrid-Polymere, Acrylatbasierende Systeme, bevorzugt Methacrylate, Epoxide, Polyamide, Polyimid und Mischungen derselben bestehen. Diese Ausgleichsschicht kann mit und ohne Nanopartikel eingesetzt werden. Auf diese Ausgleichsschicht wird dann die bereits beschriebene Farbschicht aufgebracht.

### Ausführungsbeispiel 1: dunkle Glaskeramik mit glatter Unterseite

### Herstellung Bindemittel A

Es werden 0,08 mol GPTES (Glycidyloxypropyltriethoxysilan) mit 0,02 mol TEOS (Tetraethoxysilan) mit 0,125 mol Paratoluolsäure versetztem Wasser hydrolysiert.

Anschließend wird das Lösungsmittel am Rotationsverdampfer entfernt und 22,6 g Binder erhalten.

### Herstellung Bindemittel B

Es werden 0,04 mol MPTMS (Methacryloxypropyltrimethoxysilan) mit 0,02 mol TEOS (Tetraethoxysilan) mit 0,04 MTEOS (Methyltriethoxysilan) mit 0,125 mol Paratoluolsäure versetztem Wasser hydrolysiert. Anschließend wird das Lösungsmittel am Rotationsverdampfer entfernt.

Als Nanopartikelhaltige Lösung wird eine käuflich erhältliche Dispersion von 15 nm großen SiO2-Partikel in Diethylenglycolmonopropylether eingesetzt.

Die Starterlösung enthält 50 mass-% an thermisch aktivierbarem Starter Methylimidazol in Ethylenglycolmonopropylether.

Auf die beidseitig glatte dunkle Glaskeramik, die aus einem Glaskeramikmaterial entsprechend einer Glaskeramik vom Typ CERAN HIGHTRANS eco<^{®}> gefertigt wurde und die eine Dicke von 4 mm aufweist, wurde auf die Unterseite per Siebdruck eine Farbe aufgedruckt, die aus folgenden Komponenten bestand:
30 mass-% Bindemittel A
65 mass-% Nanopartikelhaltige Sol-Gel-Lösung
2 mass-% Starterlösung
3 mass % Heliogenblau 23050

Diese Farbe wurde mit zwei verschiedenen Gewebestärken gedruckt, und anschließend 3 min mit UV-Beleuchtung des Geräteteypes Dymax 500 getrocknet. Mit der Gewebestärke 100-40 lag die Schichtdicke bei 4,9 µm, die Schicht war rissig und der Gesamtfarbeindruck mit Beleuchtung durch eine weiße LED war bläulich.

Mit der Siebstärke 140-31 hingegen wurde eine Schichtdicke von 2,8 µm erzielt, die eine geschlossene, homogene Oberflächenstruktur aufwies. Mit derselben Hinterleuchtung wurde diesmal ein weißer Gesamteindruck erzielt.

### Ausführungsbeispiel 2: dunkle Glaskeramik mit genoppter Unterseite

Auf eine genoppte dunkle Glaskeramik vom Typ CERAN HIGHTRANS eco<^{®}> wurde per Siebdruck eine Ausgleichsschicht aus Polyurethanharz gedruckt und anschließend thermisch gehärtet. Die Schichtdickenschwankung lag bei < 3 µm. Auf diese Ausgleichsschicht wurde eine Farbe mittels Siebdruckverfahren gedruckt, die aus folgenden Komponenten bestand:
32 % Bindemittel A
60 % Nanopartikelhaltige Sol-Gel-Lösung
2% Starterlösung
6% Spritblau 94030

Die Trocknung erfolgte bei 3 min UV-Strahlung.

Die Schichtdickenschwankung lag bei < 3 µm; das Licht einer weißen LED wurde homogen weiß angezeigt.

### Ausführungsbeispiel 3: dunkle Glaskeramik mit genoppter Unterseite

Auf eine genoppte dunkle Glaskeramik vom Typ CERAN HIGHTRANS eco<^{®}> wurde per Siebdruck eine Ausgleichsschicht aus Polyurethanharz gedruckt und anschließend thermisch gehärtet. Die Schichtdickenschwankung lag bei < 3 µm. Auf diese Ausgleichsschicht wurde eine Farbe mittels Siebdruckverfahren gedruckt, die aus folgenden Komponenten bestand:
32 % Bindemittel B
60 % Nanopartikelhaltige Sol-Gel-Lösung
2% Starterlösung
6% Spritblau 94030

Die Trocknung erfolgte bei 60 min IR-Strahlung kombiniert mit Umluft.

Die Schichtdickenschwankung lag bei < 3 µm; das Licht einer weißen LED wurde homogen weiß angezeigt.

### Ausführungsbeispiel 4: dunkle Glaskeramik mit keramischer Farbschicht

Auf einer 4mm dicken, beidseitig glatten Glaskeramik (entsprechendes Material wie CERAN HIGHTRANS eco<^{®}>) wurde per Siebdruck eine keramische Farbe gedruckt.

Die Farbe bestand aus einem Borosilikatglaspulver (40%), Siebdruckmedium (50%) und Blaupigment (10%) der CI-Klasse 36 (Cobalt-Aluminium-Oxid), die im Dreiwalzenstuhl homogenisiert wurde.

Diese Farbe wurde im Ofen bei Temperaturen > 500° eingebrannt.

Die Schichtdicke betrug 4 µm, wobei die Schwankung der Schichtdicke < 1 µm betrug. Der Farbeindruck mit einer weißen LED-Hinterleuchtung war weiß mit einem leichten Rotstich.

## Patentansprüche

1. Anzeigevorrichtung mit einer transparenten eingefärbten Glaskeramik, die eine vorderseitige Anzeigeseite und eine rückwärtige Beleuchtungsseite aufweist, wobei im Bereich der Beleuchtungsseite mindestens ein Leuchtelement angeordnet ist, **dadurch gekennzeichnet, dass** auf die Glaskeramik mittelbar oder unmittelbar ein Licht-Kompensationsfilter in Form einer Farbschicht aufgebracht ist, dass der Glaskeramikkörper und der Licht-Kompensationsfilter zwei hintereinander angeordnete Filter bilden, und dass das Leuchtelement (50) eine weiße LED ist.

2. Anzeigevorrichtung nach Anspruch 1, **dadurch gekennzeichnet, dass** die Farbschicht als Farbauftrag aufbeschichtet ist.

3. Anzeigevorrichtung nach Anspruch 1 oder 2, **dadurch gekennzeichnet, dass** die Farbschicht auf der Beleuchtungsseite angeordnet ist.

4. Anzeigevorrichtung nach einem der Ansprüche 1 bis 3, **dadurch gekennzeichnet, dass** die Farbschicht organische und/oder anorganische Farbstoffe und oder Farbpigmente, vorzugswiese blaue, grüne und/oder blaugrüne Farbstoffe und oder Farbpigmente aufweist.

5. Anzeigevorrichtung nach Anspruch 4, **dadurch gekennzeichnet, dass** die Farbpigmente oder zumindest ein Teil der Farbpigmente ein Transmissionsmaximum im Bereich von 400 nm bis 600 nm, vorzugsweise im Bereich von 450 nm bis 550 nm, aufweisen.

6. Anzeigevorrichtung nach einem der Ansprüche 4 oder 5, **dadurch gekennzeichnet, dass** zumindest ein Teil der Farbstoffepigmente aus Eisencyan-Komplexen, Imdanthron, Indigo, Kupferphtalocyanin, vorzugsweise in β-Form der Kupferphtalocyanine, Chrom-Chelat, vorzugsweise Cr3+, mit Liganden aus der Azooder Azomethinreihe, zum Beispiel Heliogenblau 23050, Farbpigmente wie bspw. Cobalt-Zinn-Oxid-Verbindungen (Mischoxide), Aluminiumsilikate, bevorzugt schwefelhaltige Aluminiumsilikate, Zirkonsilikate, bevorzugt mit Vanadiumzusatz, besonders bevorzugt mit 1,5 % Vanadiumzusatz, Zirkonsilikat-Vanadiumoxid-Verbindungen, Calcium-Kupfer-Silikate, bevorzugt CaCuSi4O10, Kupfercarbonatverbindungen 2CuCo3-Cu(OH)2, Cobalt-Aluminium-Oxid-Verbindungen, bevorzugt als Cobalt-Aluminat (Cobalt-Aluminium-Spinell; Colour Index Blau 28), und/oder Cobalt-Chrom-Oxid-Verbindungen, bevorzugt als Cobalt-Chromit (Cobalt-Chrom-Spinell; Colour Index Blau 36), besteht.

7. Anzeigevorrichtung nach einem der Ansprüche 4 bis 6, **dadurch gekennzeichnet, dass** zumindest ein Teil der Farbpigmente von Nanopartikeln gebildet ist.

8. Anzeigevorrichtung nach einem der Ansprüche 4 bis 7, **dadurch gekennzeichnet, dass** die Farbpigmente als Streupartikel auf der Farbschicht appliziert sind.

9. Anzeigevorrichtung nach einem der Ansprüche 1 bis 8, **dadurch gekennzeichnet, dass** die Farbschicht eine Farbmatrix aus organischen und/oder anorganischen Komponenten aufweist.

10. Anzeigevorrichtung nach Anspruch 9, **dadurch gekennzeichnet, dass** die anorganische Farbmatrix aus Glaspulver besteht.

11. Anzeigevorrichtung nach Anspruch 9 oder 10, **dadurch gekennzeichnet, dass** die organische Farbmatrix Binder, Lösungsmittel und Zusätze wie Härter, Verlaufsmittel und Additive aufweist.

12. Anzeigevorrichtung nach Anspruch 11, **dadurch gekennzeichnet, dass** der Binder Kautschuk, Polyurethanharze, Silicone (organisch und/oder anorganisch vernetzend), Sol-Gel-Verbindungen, Hybrid-Polymere, Acrylatbasierende Systeme, bevorzugt Methacrylate, Epoxide, Polyamide und/oder Polyimid aufweist.

13. Anzeigevorrichtung nach Anspruch 9 bis 12, **dadurch gekennzeichnet, dass** als Lösungsmittel Terpeniol, n-Butylacetat, Carbitol, Carbitolacetat, Etylenglykolmonoethylether und/oder hochsiedende Lösungsmittel mit einem Dampfdruck < 5 hPa, bevorzugt < 2 hPa, besonders bevorzugt < 1 hPa, verwendet sind.

14. Anzeigevorrichtung nach einem der Ansprüche 9 bis 13, **dadurch gekennzeichnet, dass** als Härter Nanopartikel und/oder Bis-epoxide verwendet sind.

15. Anzeigevorrichtung nach einem der Ansprüche 9 bis 14, **dadurch gekennzeichnet, dass** als Verlaufsmittel PEG, BYK302 und/oder BYK306 verwendet ist.

16. Anzeigevorrichtung nach einem der Ansprüche 9 bis 15, **dadurch gekennzeichnet, dass** als Additive organische Eindicker in Form von Cellulose-Verbindungen, Polyvinylpyrilidon, Polyethylenglykol, Block-Co-Polymere, Aerosile und/oder flammenpyrolytische bzw. per Fällungsprozess hergestellte SiOx bzw. AlxOy. Partikel verwendet sind.

17. Anzeigevorrichtung nach einem der Ansprüche 1 bis 16, **dadurch gekennzeichnet, dass** die Farbschicht in die Oberfläche der Glaskeramik eingebrannt, thermisch und/oder UV-gehärtet ist.

18. Anzeigevorrichtung nach einem der Ansprüche 1 bis 17, **dadurch gekennzeichnet, dass** die Schwankungen der Schichtdicke der Farbschicht < 3 µm, vorzugsweise < 1 µm, beträgt.

19. Anzeigevorrichtung nach einem der Ansprüche 1 bis 18, **dadurch gekennzeichnet, dass** zwischen der Glaskeramik und der Farbschicht eine Ausgleichsschicht angeordnet ist.

20. Anzeigevorrichtung nach Anspruch 19, **dadurch gekennzeichnet, dass** die Brechzahl der Ausgleichsschicht gegenüber der Brechzahl der Glaskeramik um maximal 0,2 bevorzugt kleiner 0,1 abweicht.

21. Anzeigevorrichtung nach Anspruch 19 oder 20, **dadurch gekennzeichnet, dass** die Ausgleichsschicht Polyurethanharze, Silicone (organisch und/oder anorganisch vernetzend), Sol-Gel-Verbindungen, Hybrid-Polymere, Acrylatbasierende Systeme, bevorzugt Methacrylate, Epoxide, Polyamide und/oder Polyimid aufweist.

22. Anzeigevorrichtung nach einem der Ansprüche 1 bis 21, **dadurch gekennzeichnet, dass** die Glaskeramik eine mittlere Transmission von > 0,2 %, vorzugsweise > 0,4 %, jeweils für jeden der Spektralbereiche 420 nm bis 500 nm, 500 nm bis 620 nm und 550 nm bis 640 nm aufweist.

23. Anzeigevorrichtung nach einem der Ansprüche 1 bis 22, **dadurch gekennzeichnet, dass** die maximale Transmission < 40 %, vorzugsweise < 25%, bei 400 nm und 700 nm, und im Mittel von < 4 % zwischen 450 nm bis 600 nm beträgt.

24. Anzeigevorrichtung nach einem der Ansprüche 1 bis 23, **dadurch gekennzeichnet, dass** der Farbort der Normalbeleuchtung durch die Glaskeramik innerhalb einer Grenzkurve angeordnet ist, die im Chromatizitätsdiagramm CIExyY-2° durch folgende Eckkoordination bestimmt ist:
| Grenzkurve G1 | |
|---|---|
| **x** | **y** |
| 0,71 | 0,27 |
| 0,17 | 0,02 |
| 0,12 | 0,08 |
| 0,05 | 0,30 |
| 0,01 | 0,60 |
| 0,08 | 0,81 |
| 0,28 | 0,70 |
| 0,71 | 0,27 |
, vorzugsweise durch folgende Eckkoordination bestimmt ist:
| Grenzkurve G2 | |
|---|---|
| **x** | **y** |
| 0,64 | 0,28 |
| 0,20 | 0,07 |
| 0,17 | 0,09 |
| 0,10 | 0,30 |
| 0,08 | 0,56 |
| 0,12 | 0,70 |
| 0,26 | 0,65 |
| 0,64 | 0,28 |

25. Anzeigevorrichtung nach einem der Ansprüche 1 bis 24, **dadurch gekennzeichnet, dass** das auf der Anzeigeseite emittierte Licht innerhalb der Grenzkurve angeordnet ist, die im Chromatizitätsdiagramm CIExyY-2° durch folgende Eckkoordinaten bestimmt ist:
| W1 | |
|---|---|
| x | y |
| 0,3 | 0,25 |
| 0,26 | 0,32 |
| 0,37 | 0,43 |
| 0,51 | 0,48 |
| 0,48 | 0,35 |
| 0,35 | 0,3 |
, vorzugweise durch folgende Eckkoordinaten bestimmt ist:
| W2 | |
|---|---|
| x | y |
| 0,3068 | 0,3113 |
| 0,3028 | 0,3304 |
| 0,3205 | 0,3481 |
| 0,3207 | 0,3462 |
| 0,3376 | 0,3616 |
| 0,3551 | 0,376 |
| 0,3548 | 0,3736 |
| 0,3736 | 0,3874 |
| 0,4006 | 0,4044 |
| 0,3996 | 0,4015 |
| | |
|---|---|
| 0,4299 | 0,4165 |
| 0,4562 | 0,426 |
| 0,4813 | 0,4319 |
| 0,4593 | 0,3944 |
| 0,4147 | 0,3814 |
| 0,3889 | 0,369 |
| 0,3898 | 0,3716 |
| 0,367 | 0,3578 |
| 0,3512 | 0,3465 |
| 0,3515 | 0,3487 |
| 0,3366 | 0,3369 |
| 0,3222 | 0,3243 |
| 0,3221 | 0,3261 |

26. Anzeigevorrichtung nach einem der Ansprüche 1 bis 25, **dadurch gekennzeichnet, dass** die Glaskeramik eine Dicke zwischen der Anzeigeseite und der Beleuchtungsseite im Bereich zwischen 2 bis 6 mm aufweist.

27. Anzeigevorrichtung nach einem der Ansprüche 1 bis 26, **dadurch gekennzeichnet, dass** die Glaskeramik beidseitig glatt ist.

28. Anzeigevorrichtung nach einem der Ansprüche 1 bis 27, **dadurch gekennzeichnet, dass** im Bereich der Beleuchtungsseite ein RGB-Leuchtmittel und/oder ein nicht monochromatisches Leuchtmittel angeordnet ist.

29. Anzeigevorrichtung nach einem der Ansprüche 1 bis 28, **dadurch gekennzeichnet, dass** die Schichtdicke der Farbschicht im Bereich zwischen 30 - 1 µm, bevorzugt 10 - 2 µm beträgt.

30. Anzeigevorrichtung nach einem der Ansprüche 1 bis 29, **dadurch gekennzeichnet, dass** die Konzentration der Farbstoffe und oder Farbpigmente der Farbschicht im Bereich zwischen 4 und 0,1 Gew% bevorzugt 2 und 0,4 Gew % beträgt.

31. Anzeigevorrichtung nach einem der Ansprüche 1 bis 30, **dadurch gekennzeichnet, dass** die Konzentration Farbpigmente der anorganischen Farbschicht im Bereich zwischen 40 und 1 Gew%, bevorzugt 20 und 2 Gew %, besonders bevorzugt 10 und 5 Gew% beträgt.

## Claims

1. A display device with a transparent, colored glass-ceramic product, which has a display face on the front and an illumination face on the back, at least one light-emitting element being disposed in the region of the illumination face, **characterized**
**in that** a light compensation filter in the form of a color layer is introduced directly or indirectly on the glass ceramics (10),
in hat the glass-ceramic body and the light compensation filter form two filters arranged one behind the other,
and **in that** the light-emitting element is a white LED.

2. The display device according to claim 1,
**characterized**
**in that** the color layer is coated on as a color coating.

3. The display device according to claim 1 or 2,
**characterized**
**in that** the color layer is disposed on the illumination face.

4. The display device according to one of claims 1 to 3,
**characterized**
**In that** the color layer has organic and/or inorganic colorants and/or color pigments, preferably blue, green, and/or blue-green colorants and/or color pigments.

5. The display device according to claim 4,
**characterized**
**in that** the color pigments or at least one portion of the color pigments has (have) a transmission maximum in the region of 400 nm to 600 nm, preferably in the region of 450 nm to 550 nm.

6. The display device according to one of claims 4 or 5,
**characterized**
**in that** at least one portion of the colorants/color pigments is composed of ironcyano complexes, imdanthrone, indigo; copper phthalocyanin, preferably in the β-form of the copper phthalocyanin; chromium chelate,
preferably Cr³⁺, with ligands of the azo or azomethine series, for example, Heliogen blue 23050; color pigments such as, e.g., cobalt-tin oxide compounds (mixed oxides); aluminum silicates, preferably sulfur-containing aluminum silicates; zirconium silicates, preferably containing vanadium additive, most particularly preferred with 1.5% vanadium additive; zirconium silicate-vanadium oxide compounds; calcium-copper silicates, preferably CaCuSi₄O₁₀; copper carbonate compounds 2CuCo_{3*}Cu(OH)₂; cobalt-aluminum oxide compounds, preferably as cobalt aluminate (cobalt-aluminum spinel; Color Index Blue 28); and/or cobalt-chromium oxide compounds, preferably as cobalt chromite (cobalt-chromium spinel; Color Index Blue 36).

7. The display device according to one of claims 4 to 6, **characterized**
**in that** at least one portion of the color pigments is formed of nanoparticles.

8. The display device according to one of claims 4 to 7,
**characterized**
**in that** the color pigments are applied as particles scattered on the color layer.

9. The display device according to one of claims 1 to 8,
**characterized**
**in that** the color layer has a color matrix of organic and/or inorganic components.

10. The display device according to claim 9,
**characterized**
**in that** the inorganic color matrix is composed of glass powder.

11. The display device according to claim 9 or 10,
**characterized**
**in that** the organic color matrix has binders, solvents and additives such as curing agents, flow-control agents and additives.

12. The display device according to claim 11,
**characterized**
**in that** the binder contains rubber, polyurethane resins, silicone (organic and/or inorganic cross-linking), sol-gel compounds, hybrid polymers, acrylate-based systems, preferably methacrylates, epoxides, polyamides and/or polyimide.

13. The display device according to claims 9 to 12,
**characterized**
**in that** terpineol, n-butyl acetate, carbitol, carbitol acetate, ethylene glycol monoethyl ether, and/or high-boiling solvents with a vapor pressure of < 5 hPa, preferably < 2 hPa, most particularly preferred < 1 hPa are used as solvents.

14. The display device according to one of claims 9 to 13,
**characterized**
**in that** nanoparticles and/or bis-epoxides are used as curing agents.

15. The display device according to one of claims 9 to 14,
**characterized**
**in that** PEG, BYK302 and/or BYK306 is (are) used as the leveling agent(s).

16. The display device according to one of claims 9 to 15,
**characterized**
**in that** organic thickeners in the form of cellulose compounds, polyvinylpyrrolidone, polyethylene glycol, block copolymers; aerosils, and/or flame-pyrolysis-produced or precipitation process-produced SiOx or AlxOy particles are used as additives.

17. The display device according to one of claims 1 to 16,
**characterized**
**in that** the color layer is baked into the surface of the glass ceramics and is cured thermally and/or by UV.

18. The display device according to one of claims 1 to 17,
**characterized**
**in that** the fluctuations in the layer thickness of the color layer are < 3 µm, preferably < 1 µm.

19. The display device according to one of claims 1 to 18,
**characterized**
**in that** a leveling layer is disposed between the glass ceramics and the color layer.

20. The display device according to claim 19,
characterized
that the refractive index of the leveling layer differs from the refractive index of the glass ceramic by a maximum of 0.2, preferably less than 0.1.

21. The display device according to claim 19 or 20,
**characterized**
**in that** the leveling layer contains polyurethane resins, silicone (organic and/or inorganic, crosslinking), sol-gel compounds, hybrid polymers, acrylate-based systems, preferably methacrylates, epoxides, polyamides and/or polyimide.

22. The display device according to one of claims 1 to 21,
**characterized**
**in that** the glass ceramics has an average transmission of > 0.2%, preferably > 0.4%, for each of the spectral regions of 420 nm to 500 nm, 500 nm to 620 nm and 550 nm to 640 nm.

23. The display device according to one of claims 1 to 22,
**characterized**
**in that** the maximum transmission is < 40%, preferably < 25%, at 400 nm and 700 nm, and on average < 4% between 450 nm and 600 nm.

24. The display device according to one of claims 1 to 23,
**characterized**
**in that** the color coordinates of standard illumination through the glass ceramics (10) are disposed within a boundary curve that is defined by the following corner coordinates in the CIExyY-2° chromaticity diagram:
| Boundary curve G1 | |
|---|---|
| **x** | **y** |
| 0.71 | 0.27 |
| 0.17 | 0.02 |
| 0.12 | 0.08 |
| 0.05 | 0.30 |
| 0.01 | 0.60 |
| 0.08 | 0.81 |
| 0.28 | 0.70 |
| 0.71 | 0.27 |
and preferably is defined by the following corner coordinates:
| Boundary curve G2 | |
|---|---|
| **x** | **y** |
| 0.64 | 0.28 |
| 0.20 | 0.07 |
| | |
|---|---|
| 0.17 | 0.09 |
| 0.10 | 0.30 |
| 0.08 | 0.56 |
| 0.12 | 0.70 |
| 0.26 | 0.65 |
| 0.64 | 0.28 |

25. The display device according to one of claims 1 to 24,
**characterized**
**in that** the light emitted on the display face is disposed within the boundary curve that is defined by the following corner coordinates in the CIExyY-2° chromaticity diagram:
| W1 | |
|---|---|
| x | y |
| 0.3 | 0.25 |
| 0.26 | 0.32 |
| 0.37 | 0.43 |
| 0.51 | 0.48 |
| 0.48 | 0.35 |
| 0.35 | 0.3 |
, preferably is defined by the following corner coordinates:
| W2 | |
|---|---|
| x | y |
| 0.3068 | 0.3113 |
| 0.3028 | 0.3304 |
| 0.3205 | 0.3481 |
| 0.3207 | 0.3462 |
| 0.3376 | 0.3616 |
| 0.3551 | 0.376 |
| 0.3548 | 0.3736 |
| 0.3736 | 0.3874 |
| 0.4006 | 0.4044 |
| 0.3996 | 0.4015 |
| 0.4299 | 0.4165 |
| 0.4562 | 0.426 |
| 0.4813 | 0.4319 |
| 0.4593 | 0.3944 |
| | |
|---|---|
| 0.4147 | 0.3814 |
| 0.3889 | 0.369 |
| 0.3898 | 0.3716 |
| 0.367 | 0.3578 |
| 0.3512 | 0.3465 |
| 0.3515 | 0.3487 |
| 0.3366 | 0.3369 |
| 0.3222 | 0.3243 |
| 0.3221 | 0.3261 |

26. The display device according to one of claims 1 to 25,
**characterized**
**in that** the glass-ceramic product has a thickness between the display face and the illumination face that ranges between 2 and 6 mm.

27. The display device according to one of claims 1 to 26,
**characterized**
**in that** the glass ceramic is smooth on both sides.

28. The display device according to one of claims 1 to 27,
**characterized**
**in that** an RGB lighting means, and/or a non-monochromatic lighting means is (are) disposed in the region of the illumination face.

29. The display device according to one of claims 1 to 28,
**characterized**
**in that** the layer thickness of the color layer ranges between 30 and 1 µm, preferably between 10 and 2 µm.

30. The display device according to one of claims 1 to 29,
**characterized**
**in that** the concentration of the colorants and/or color pigments of the color layer ranges between 4 and 0.1 wt.%, preferably between 2 and 0.4 wt.%.

31. The display device according to one of claims 1 to 30,
**characterized**
**in that** the concentration of the color pigments of the inorganic color layer ranges between 40 and 1 wt.%, preferably between 20 and 2 wt.%, most particularly preferred between 10 and 5 wt.%.

## Revendications

1. Dispositif d'affichage avec une vitrocéramique transparente colorée, qui présente un côté d'affichage avant et un côté d'éclairage arrière, au moins un élément lumineux étant disposé dans la zone du côté d'éclairage, **caractérisé en ce qu'**un filtre de compensation de lumière est appliqué directement ou indirectement sur la vitrocéramique sous la forme d'une couche de couleur, **en ce que** le corps en vitrocéramique et le filtre de compensation de lumière forment deux filtres disposés l'un derrière l'autre, et **en ce que** l'élément lumineux (50) est une LED blanche.

2. Dispositif d'affichage selon la revendication 1, **caractérisé en ce que** la couche de couleur est appliquée sous la forme d'une couverture de couleur.

3. Dispositif d'affichage selon la revendication 1 ou 2, **caractérisé en ce que** la couche de couleur est disposée du côté de l'éclairage.

4. Dispositif d'affichage selon l'une quelconque des revendications 1 à 3, **caractérisé en ce que** la couche de couleur comprend des colorants organiques et/ou inorganiques et/ou des pigments colorés, de préférence des colorants bleus, verts et/ou cyan et/ou des pigments colorés.

5. Dispositif d'affichage selon la revendication 4, **caractérisé en ce que** les pigments colorés ou au moins une partie des pigments colorés présentent un maximum de transmission dans la plage de 400 nm à 600 nm, de préférence dans la plage de 450 nm à 550 nm.

6. Dispositif d'affichage selon l'une des revendications 4 ou 5, **caractérisé en ce qu'**au moins une partie des pigments colorants est constituée de complexes de cyanure de fer, d'imdanthrone, d'indigo, de phtalocyanine de cuivre, de préférence sous forme β des phtalocyanines de cuivre, de chélate de chrome, de préférence Cr3+, avec des ligands de la série azo ou azométhine, par exemple le bleu héliogène 23050, de pigments colorés comme par exemple des composés d'oxyde de cobalt et d'étain (oxydes mixtes), des silicates d'aluminium, de préférence des silicates d'aluminium contenant du soufre, des silicates de zirconium, de préférence avec addition de vanadium, de préférence encore avec addition de 1,5 % de vanadium, composés de silicate de zirconium et d'oxyde de vanadium, silicates de calcium et de cuivre, de préférence CaCuSi4O10, composés de carbonate de cuivre 2CuCo3-Cu(OH)2, composés d'oxyde de cobalt et d'aluminium, de préférence sous forme d'aluminate de cobalt (spinelle de cobalt et d'aluminium ; Colour Index Blau 28), et/ou des composés d'oxyde de cobalt et de chrome, de préférence sous forme de chromite de cobalt (spinelle de cobalt et de chrome ; Colour Index Blau 36).

7. Dispositif d'affichage selon l'une des revendications 4 à 6, **caractérisé en ce qu'**au moins une partie des pigments colorés est formée de nanoparticules.

8. Dispositif d'affichage selon l'une quelconque des revendications 4 à 7, **caractérisé en ce que** les pigments colorés sont appliqués sur la couche de couleur sous forme de particules diffusantes.

9. Dispositif d'affichage selon l'une quelconque des revendications 1 à 8, **caractérisé en ce que** la couche de couleur comprend une matrice de couleur constituée de composants organiques et/ou inorganiques.

10. Dispositif d'affichage selon la revendication 9, **caractérisé en ce que** la matrice de couleur inorganique est constituée de poudre de verre.

11. Dispositif d'affichage selon la revendication 9 ou 10, **caractérisé en ce que** la matrice de couleur organique comprend des liants, des solvants et des adjuvants tels que des durcisseurs, des agents d'étalement et des additifs.

12. Dispositif d'affichage selon la revendication 11, **caractérisé en ce que** le liant comprend du caoutchouc, des résines de polyuréthane, des silicones (à réticulation organique et/ou inorganique), des composés sol-gel, des polymères hybrides, des systèmes à base d'acrylate, de préférence des méthacrylates, des époxydes, des polyamides et/ou des polyimides.

13. Dispositif d'affichage selon les revendications 9 à 12, **caractérisé en ce que** l'on utilise comme solvant du terpéniol, de l'acétate de n-butyle, du carbitol, de l'acétate de carbitol, de l'éther monoéthylique d'éthylèneglycol et/ou des solvants à point d'ébullition élevé ayant une pression de vapeur < 5 hPa, de préférence < 2 hPa, de manière particulièrement préférée < 1 hPa.

14. Dispositif d'affichage selon l'une des revendications 9 à 13, **caractérisé en ce que** des nanoparticules et/ou des bis-époxydes sont utilisés comme durcisseurs.

15. Dispositif d'affichage selon l'une quelconque des revendications 9 à 14, **caractérisé en ce que** l'agent d'étalement utilisé est le PEG, le BYK302 et/ou le BYK306.

16. Dispositif d'affichage selon l'une des revendications 9 à 15, **caractérisé en ce que** l'on utilise comme additifs des épaississants organiques sous forme de composés cellulosiques, de polyvinylpyrilidone, de polyéthylèneglycol, de copolymères séquencés, d'aérosols et/ou de particules de SiOx ou AlxOy fabriquées par pyrolyse à la flamme ou par précipitation.

17. Dispositif d'affichage selon l'une des revendications 1 à 16, **caractérisé en ce que** la couche de couleur est cuite, durcie thermiquement et/ou par UV dans la surface de la vitrocéramique.

18. Dispositif d'affichage selon l'une des revendications 1 à 17, **caractérisé en ce que** les variations d'épaisseur de la couche de couleur sont < 3 µm, de préférence < 1 µm.

19. Dispositif d'affichage selon l'une des revendications 1 à 18, **caractérisé en ce qu'**une couche de compensation est disposée entre la vitrocéramique et la couche de couleur.

20. Dispositif d'affichage selon la revendication 19, **caractérisé en ce que** l'indice de réfraction de la couche de compensation s'écarte de l'indice de réfraction de la vitrocéramique de 0,2 au maximum, de préférence de moins de 0,1.

21. Dispositif d'affichage selon la revendication 19 ou 20, **caractérisé en ce que** la couche de compensation comprend des résines de polyuréthane, des silicones (à réticulation organique et/ou inorganique), des composés sol-gel, des polymères hybrides, des systèmes à base d'acrylate, de préférence des méthacrylates, des époxydes, des polyamides et/ou des polyimides.

22. Dispositif d'affichage selon l'une quelconque des revendications 1 à 21, **caractérisé en ce que** la vitrocéramique présente une transmission moyenne > 0,2 %, de préférence > 0,4 %, respectivement pour chacun des domaines spectraux 420 nm à 500 nm, 500 nm à 620 nm et 550 nm à 640 nm.

23. Dispositif d'affichage selon l'une des revendications 1 à 22, **caractérisé en ce que** la transmission maximale est < 40 %, de préférence < 25 %, à 400 nm et 700 nm, et en moyenne de < 4 % entre 450 nm et 600 nm.

24. Dispositif d'affichage selon l'une des revendications 1 à 23, **caractérisé en ce que** le lieu chromatique de l'éclairage normal par la vitrocéramique est disposé à l'intérieur d'une courbe limite qui est déterminée dans le diagramme de chromaticité CIExyY-2° par la coordination de coin suivante :
| courbe limite G1 | |
|---|---|
| **x** | **y** |
| 0,71 | 0,27 |
| 0,17 | 0,02 |
| 0,12 | 0,08 |
| 0,05 | 0,30 |
| 0,01 | 0,60 |
| 0,08 | 0,81 |
| 0,28 | 0,70 |
| 0,71 | 0,27 |
de préférence déterminée par la coordination de coin suivante :
| courbe limite G2 | |
|---|---|
| **x** | **y** |
| 0,64 | 0,28 |
| 0,20 | 0,07 |
| 0,17 | 0,09 |
| 0,10 | 0,30 |
| 0,08 | 0,56 |
| 0,12 | 0,70 |
| 0,26 | 0,65 |
| 0,64 | 0,28 |

25. Dispositif d'affichage selon l'une quelconque des revendications 1 à 24, **caractérisé en ce que** la lumière émise du côté de l'affichage est disposée à l'intérieur de la courbe limite qui est déterminée dans le diagramme de chromaticité CIExyY-2° par les coordonnées de coin suivantes :
| W1 | |
|---|---|
| x | y |
| 0,3 | 0,25 |
| 0,26 | 0,32 |
| 0,37 | 0,43 |
| 0,51 | 0,48 |
| 0,48 | 0,35 |
| 0,35 | 0,3 |
de préférence déterminée par la coordination de coin suivante :
| W2 | |
|---|---|
| x | y |
| 0,3068 | 0,3113 |
| 0,3028 | 0,3304 |
| 0,3205 | 0,3481 |
| 0,3207 | 0,3462 |
| 0,3376 | 0,3616 |
| 0,3551 | 0,376 |
| 0,3548 | 0,3736 |
| 0,3736 | 0,3874 |
| 0,4006 | 0,4044 |
| 0,3996 | 0,4015 |
| 0,4299 | 0,4165 |
| 0,4562 | 0,426 |
| 0,4813 | 0,4319 |
| 0,4593 | 0,3944 |
| 0,4147 | 0,3814 |
| 0,3889 | 0,369 |
| 0,3898 | 0,3716 |
| 0,367 | 0,3578 |
| 0,3512 | 0,3465 |
| 0,3515 | 0,3487 |
| 0,3366 | 0,3369 |
| 0,3222 | 0,3243 |
| 0,3221 | 0,3261 |

26. Dispositif d'affichage selon l'une quelconque des revendications 1 à 25, **caractérisé en ce que** la vitrocéramique présente une épaisseur entre le côté d'affichage et le côté d'éclairage comprise entre 2 et 6 mm.

27. Dispositif d'affichage selon l'une des revendications 1 à 26, **caractérisé en ce que** la vitrocéramique est lisse sur les deux faces.

28. Dispositif d'affichage selon l'une des revendications 1 à 27, **caractérisé en ce qu'**un moyen d'éclairage RGB et/ou un moyen d'éclairage non monochromatique est disposé dans la zone du côté éclairage.

29. Dispositif d'affichage selon l'une des revendications 1 à 28, **caractérisé en ce que** l'épaisseur de la couche de couleur est comprise entre 30 et 1 µm, de préférence entre 10 et 2 µm.

30. Dispositif d'affichage selon l'une quelconque des revendications 1 à 29, **caractérisé en ce que** la concentration des colorants et ou pigments colorés de la couche de couleur est comprise entre 4 et 0,1 % en poids, de préférence entre 2 et 0,4 % en poids.

31. Dispositif d'affichage selon l'une quelconque des revendications 1 à 30, **caractérisé en ce que** la concentration en pigments colorés de la couche de couleur inorganique est comprise entre 40 et 1 % en poids, de préférence entre 20 et 2 % en poids, plus préférentiellement entre 10 et 5 % en poids.
